# FASCICULE DE BREVET EUROPEEN

(11) **EP 0 869 858 B1**
(45) Date de publication et mention de la délivrance du brevet: **14.07.1999**
(21) Numéro de dépôt: 97936550.9
(22) Date de dépôt: 01.09.1997
(51) Int. Cl.: B23B 29/24

(54) **UNITE D'USINAGE A TETE ROTATIVE**
BEARBEITUNGSEINHEIT MIT ROTIERENDEM KOPF
MACHINING UNIT WITH ROTATING HEAD

(30) Priorité: 02.09.1996 FR 9610930
(43) Date de publication de la demande: 14.10.1998
(73) Titulaire: ESCO S.A., CH-2206 Les Geneveys-sur-Coffrane (CH)
(72) Inventeur: PIGUET, Pierre-Louis, CH-2206 Les Geneveys-sur-Coffrane (CH); ESPOSITO, Antonio, CH-2206 Les Geneveys-sur-Coffrane (CH)
(74) Mandataire: Nithardt, Roland
(86) Numéro de dépôt international: CH9700318
(87) Numéro de publication internationale: WO9809755

(56) Documents cités:
- WO-A-91/14527
- DE-A- 4 137 923

## Description

La présente invention concerne une unité d'usinage à tête rotative portant au moins deux paires d'outils pivotants, pour l'usinage d'une pièce non rotative centrée sur l'axe de rotation de la tête, comportant:
- un bâti sur lequel est monté un rotor comprenant la tête rotative et une broche solidaire de cette tête, le rotor étant pourvu d'un conduit axial et coupé à des moyens d'entraînement en rotation,
- des moyens de guidage axial de la pièce, ces moyens étant montés par des paliers dans la broche ou la tête rotative,
- des moyens pour maintenir et déplacer axialement la pièce,
- au moins quatre supports d'outils, montés dans la tête rotative de manière à pivoter autour d'axes respectifs parallèles à l'axe de rotation, chaque support comportant un lever de commande disposé transversalement, et
- des moyens de commande de pivotement, coopérant avec ledit lever et comprenant un élément rotatif de commande, qui est mobile en translation axiale dans le rotor et coupé à un dispositif de commande de translation, et des paires d'organes d'appui disposés respectivement sur chaque levier de commande et sur l'élément rotatif de commande correspondant, chaque paire d'organes d'appui comprenant une surface directrice et une surface d'appui s'appuyant contre la surface directrice dans une position variable en fonction de la translation de l'élément rotatif de commande, ladite surface directrice se trouvant sur le support d'outil et la surface d'appui correspondante se trouvant sur l'élément rotatif de commande, et chaque surface directrice correspondant à un support d'outil pivotant ayant la forme d'une portion d'hélice dont l'axe coïncide avec l'axe de pivotement dudit support, et les surfaces directrices helicoïdales ayant des pas respectifs de sens opposés.

La tête d'usinage de ce type décrite par la publication internationale WO 91/14527 comporte une broche porte-outil équipée de quatre outils couplés par paires, chaque paire d'outils étant commandée par un axe numerique.

Cette configuration impose l'utilisation d'une commande numérique relativement évoluée dont le prix est élevé.

Ceci constitue un inconvénient majeur et empêche la réalisation d'une machine ayant un prix de revient relativement bas. Pour pallier cet inconvénient, la présente invention se propose de réaliser une broche à quatre outils couplés par paires, mais où une seule paire d'outils peut être commandée à la fois. La sélection de la paire d'outils avec laquelle un usinage doit être effectué doit pouvoir être faite pendant la rotation de la broche qui porte ces outils.

Ce but est atteint par l'unité d'usinage selon l'invention, caractérisée qu'elle comporte une douille de commande montée coaxialement sur ladite broche, cette douille étant agencée pour coulisser axialement et pour occuper une première position, une deuxième position et une position médiane, cette douille portant à l'une de ses extrémités deux surfaces de commande de forme ellipsoïdale, agencées pour coopérer avec les surfaces directrices hélicoïdales des organes d'appui et pour effectuer la plongée des outils, des moyens pour déplacer axialement ladite douille de commande et un dispositif de déphasage agencé pour faire tourner ladite douille de commande d'un angle prédéterminé autour de son axe.

Selon un mode de réalisation préféré, les moyens pour déplacer la douille de commande comportent un levier de commande pivotant sur un axe monté sur un support solidaire du bâti portant la broche, ce levier comportant deux noix d'entraînement centrées sur des axes qui s'engagent dans deux rainures d'une douille montée coaxialement sur la douille de commande.

La douille est de préférence montée sur la douille de commande par l'intermédiaire de deux roulements à billes à contact oblique préchargés.

Selon une forme de réalisation particulièrement avantageuse, le dispositif de déphasage comporte une poulie reliée à la douille de commande par deux clavettes qui assurent le couplage en rotation entre ladite poulie et ladite douille et qui laissent cette dernière libre de se déplacer axialement, ladite poule étant coupée à une poulie folle montée sur un support tubulaire portant une poule de renvoi, montée folle et couplée à une poulie d'entraînement montée sur la broche et entraînée par un moteur d'entraînement.

Le couplage entre la poulie reliée à la douille de commande et la poule folle peut s'effectuer au moyen d'une courroie.

Le couplage entre la poule de renvoi et la poulie d'entraînement peut s'effectuer au moyen d'une courroie.

Le dispositif de déphasage comporte de préférence des moyens pour décaler angulairement la poulie folle et la poule de renvoi.

Les moyens pour décaler angulairement les deux poules comportent avantageusement deux pots solidaires de la poulie de renvoi engagés dans deux rainures hélicoïdales d'un arbre et deux plots solidaires de la poulie folle engagés dans deux rainures longitudinales dudit arbre, ainsi qu'un. organe agencé pour déplacer axialement ledit arbre.

Ledit organe est de préférence un vérin et ledit vérin est de préférence couplé à l'arbre au moyen d'une cloche et d'un roulement de poussée montés à une extrémité de cet arbre.

Ledit vérin est avantageusement associé à des capteurs de position agencés pour fournir un signal de quittance de son déplacement.

Selon un mode de réalisation préféré, la poulie folle et la poulie de renvoi sont crantées et ont le même nombre de dents.

Dans ce cas, les rainures hélicoïdales sont agencées de telle manière que, lorsque le vérin déplace l'arbre d'une première position vers une seconde position, le décalage de la poulie solidaire de la douille de commande par rapport à l'arbre solidaire de la broche est de 90° lorsque le nombre de paires d'outils portées par la tête d'usinage est égal à deux.

Le vérin est de préférence associé à une vis de réglage qui limite sa course.

L'invention sera mieux comprise en référence à la description d'une forme de réalisation donnée à titre d'exemple non limitatif et aux dessins annexes, dans lesquels :
- la figure 1 représente le rotor de l'unité d'usinage selon l'invention,
- les figures 2A et 2AA représentent une vue frontale de la tête rotative de l'unité d'usinage selon l'invention, dans une première position dans laquelle l'un des burins plonge dans la matière à usiner,
- les figures 2B et 2BB représentent une vue frontale de la tête rotative de l'unité d'usinage selon l'invention, dans une deuxième position dans laquelle les burins sont retirés de la matière à usiner,
- les figures 2C et 2CC représentent une vue frontale de la tête rotative de l'unité d'usinage selon l'invention, dans laquelle le burin opposé à celui qui plonge dans la matière à usiner sur la figure 2AA, est en position de travail,
- la figure 3 représente une vue agrandie de la tête rotative dans laquelle la douille de commande est dans une première position correspondant aux positions des burins selon les figures 2A, 2AA, 2B, 2BB, 2C et 2CC,

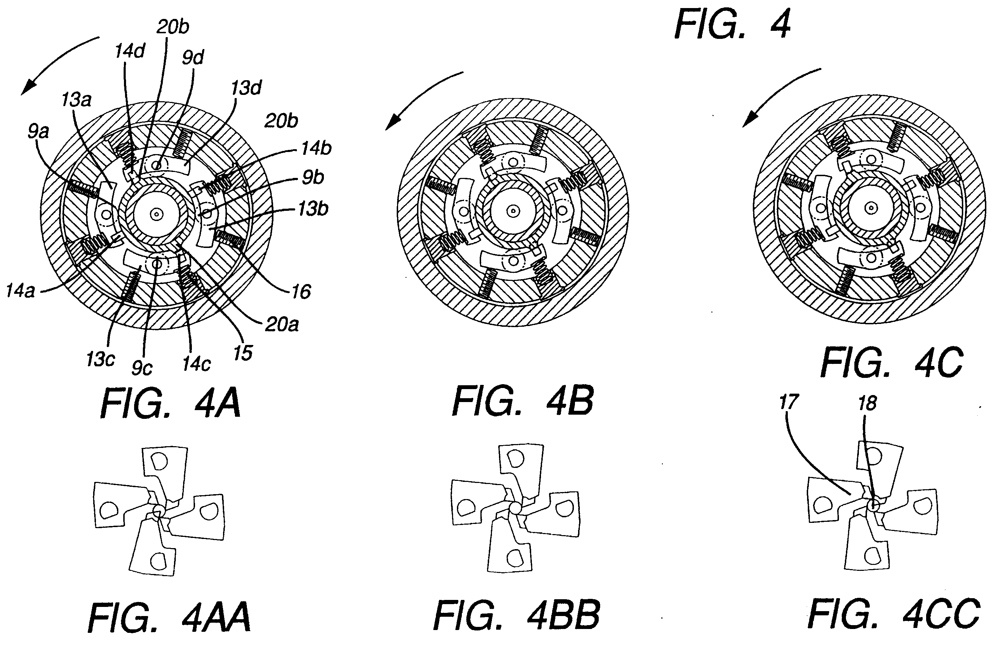

- les figures 4A, 4AA, 4B, 4BB, 4C, 4CC représentent des vues similaires à celles des figures 2A, 2AA, 2B, 2BB, 2C, 2CC respectivement, mais pour une seconde position de la douille de commande,
- la figure 5 représente une vue agrandie de la tête rotative dans laquelle la douille de commande est dans la seconde position correspondant aux positions des burins selon les figures 4A, 4AA, 4B, 4BB, 4C et 4CC, et
- la figure 6 représente une vue en élévation illustrant plus particulièrement la commande de plongée des outils.

En référence aux figures, l'unité d'usinage représentée se compose principalement de trois éléments essentiels qui sont le rotor, le dispositif de commande de déphasage et le dispositif d'entraînement des outils.

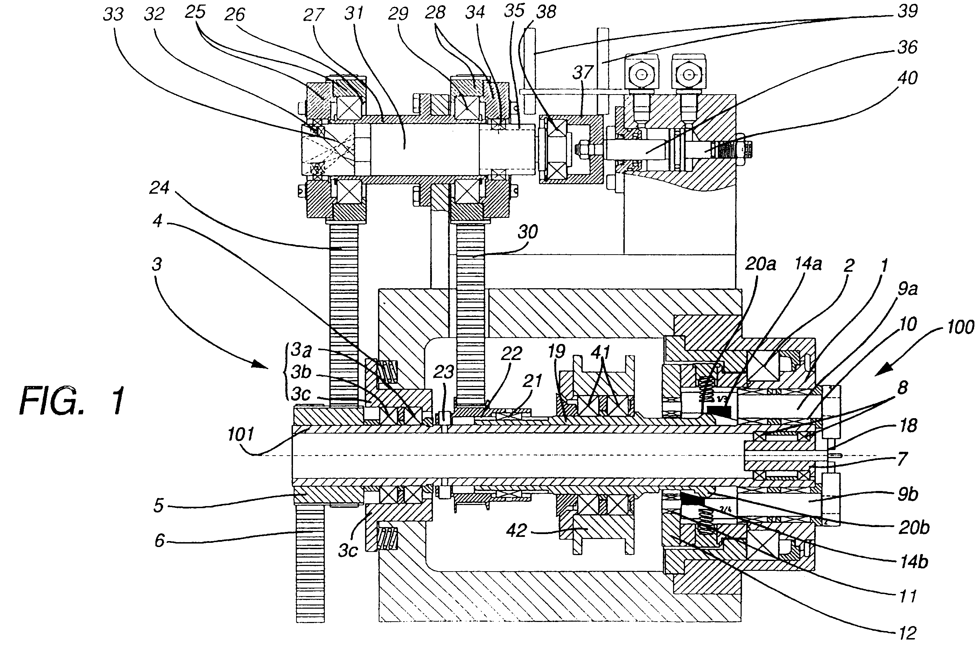

Le rotor 100, représenté par la figure 1 comporte un arbre rotatif 1 supporté par un palier avant 2 et un palier arrière 3 qui se compose de deux roulements 3a et 3b à contact oblique montés dans un boîtier coulissant 3c. Les roulements des paliers avant et arrière sont montés en tandem et préchargés par des ressorts de compression 4. La mise en rotation de la broche 101 se fait au moyen d'une poulie crantée 5 couplée à un moteur d'entraînement (non représenté) par une courroie crantée 6.

La matière à usiner, sous la forme d'un fil, est guidée par un canon de guidage 7 supporté par deux roulements préchargés 8. Un système de pinces (non représenté) assure l'avance de la matière.

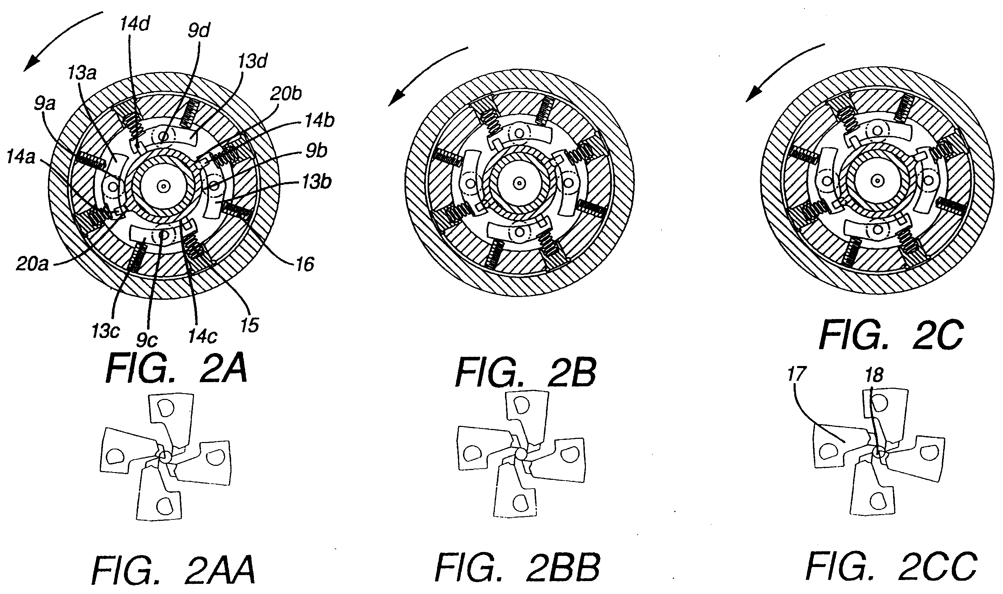

L'arbre 1 comporte quatre alésages parallèles à l'axe de rotation, mais excentrés, dans lesquels sont montés des axes porte-burin 9a, 9b, 9c et 9d. Les axes porte-burin 9a et 9c sont identiques, de même que les axes porte-burin 9b et 9d. Ces axes sont supportés à l'avant par un double palier à aiguilles 10 et à l'arrière par un palier à aiguilles simple 11, logé dans un couvercle 12. Entre ces paliers se situent, solidaires des axes porte-burin, des leviers 13a, 13b, 13c et 13d de commande (voir figure 2). On notera que les leviers 13a et 13c sont identiques ainsi que les leviers 130 et 13d. Les leviers 13a et 13c supportent des portions d'hélice 14a et 14c et les leviers 13b et 13d supportent des portions d'hélice 14b et 14d. Les portions d'hélice 14a et 14c sont identiques ainsi que les portions d'hélice 14b et 14d, mais ces dernières sont inversées par rapport aux deux précédentes. Des ressorts de poussée 15 (voir figure 2) assurent une prise de jeu tandis que des vis 16 permettent de limiter le débattement angulaire des leviers de commande et par conséquent des axes porte-burin correspondants.

A l'extrémité avant des axes porte-burin 9a, 9b, 9c et 9d sont montés des porte-burin 17. La mise en position au diamètre de tournage voulu, de l'arête de coupe 18 des burins est obtenue par le pivotement des axes porte-burin 9a à 9d.

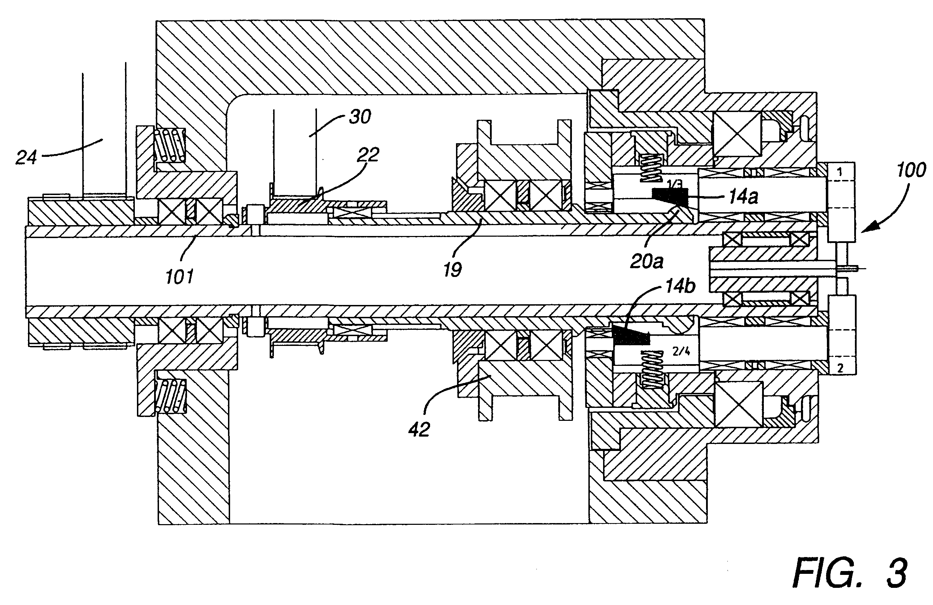

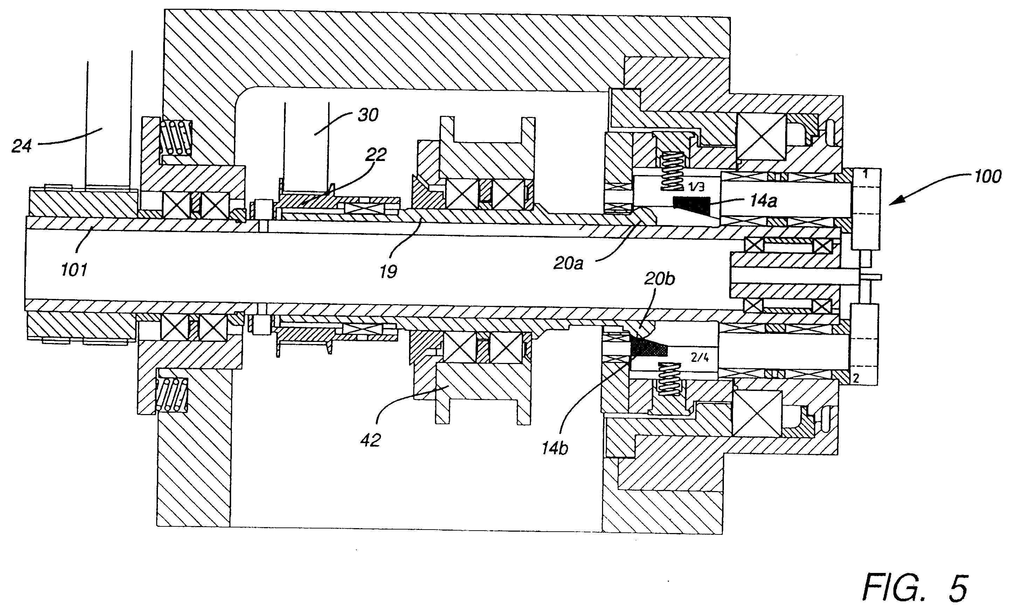

Ce pivotement est réalisé par le déplacement axial d'une douille de commande 19 qui porte à son extrémité avant deux surfaces de forme ellipsoïdale 20a et 20b agencées pour être en contact avec les portions d'hélice 14a et 14b. Lorsque la douille de commande est en position médiane, c'est-à-dire dans une position intermédiaire par rapport à celles représentées par les figures 3 et 5, les ressorts 15 font pivoter les leviers 13a à 13d et, par conséquent les axes porte-burin correspondants 9a à 9d, de telle manière qu'ils se mettent en appui contre les vis de butée 16. Celles-ci sont ajustées pour que les directrices hélicoïdales soient décollées des surfaces de forme ellipsoïdale 20a et 20b, dans cette position de la douille de commande 19.

Lorsque la surface 20a vient en contact avec la portion d'hélice 14a, suite à un déplacement vers la droite de la douille de commande 19, comme le montre la figure 3, elle provoque le pivotement du levier de commande 13a et de l'axe porte-burin 9a et par conséquent la plongée du burin dans la matière à usiner. Le levier porte-burin 13b reste en butée contre la vis 16. Il en est de même des leviers porte-burin 13c et 13d.

Lorsque la surface 20b vient en contact avec la portion d'hélice 14b, suite à un déplacement vers la gauche de la douille de commande 19, comme le montre la figure 5, elle provoque le pivotement du levier 13b et de l'axe porte-burin 90 et par conséquent la plongée du burin dans la matière. Le levier porte-burin 13a reste en butée contre la vis 16. Il en est de même des leviers porte-burin 13c et 13d.

Pour travailler avec les axes 9c et 9d, il suffit de faire tourner la douille de commande 19 d'un quart de tour par rapport à l'arbre 1. Le fonctionnement décrit ci-dessus est alors le même pour les axes porte-burin 9c et 9d respectivement, au lieu des axes porte-burin 9a et 9d.

Cette rotation de la douille de commande 19 est engendrée par un dispositif de commande de déphasage. Ce dispositif comporte une poulie 22 reliée à la douille 19 par deux clavettes 21 qui assurent le couplage en rotation, mais qui laissent la douille de commande 19 libre de se déplacer axialement par rapport à la poulie 22. Cette poulie est équipée de deux rainures circulaires 22a et 22b, à l'intérieur desquelles sont situées des butées 23 solidaires de l'arbre 1. L'angle des entrées est tel qu'il permet un pivotement d'un quart de tour de la poulie 22 par rapport à l'arbre 1. Les entrées servent aussi au maintien de la position axiale de la poulie 22 par l'intermédiaire des butées 23.

La poulie 5 est coupée à une poule de renvoi 25 par l'intermédiaire d'une courroie 24. Cette poulie de renvoi 25 est montée folle sur un support tubulaire 27 au moyen d'un palier 26. Sur ce même support, est montée une deuxième poulie folle 28 par l'intermédiaire d'un palier 29. Cette poulie folle 28 est couplée à la poulie 22 qu'elle entraîne au moyen d'une courroie crantée 30. La poule de renvoi 25 est reliée à un arbre 31 par deux pots 32 engagés respectivement dans deux rainures hélicoïdales 33. La poulie de renvoi 28 est reliée à l'arbre 31 par deux plots 34 engagés dans deux rainures longitudinales 35. L'arbre 31 peut être déplacé axialement à l'aide d'un vérin 36. Ce dernier porte à son extrémité en regard de l'arbre 31, une cloche 37 dans laquelle est monté un roulement de poussée 38. La bague intérieure de ce roulement est montée rigidement sur l'arbre 31. Des capteurs de position 39 délimitent la course du vérin 36 et donnent la quittance de son déplacement.

Lorsque l'arbre 31 est dans sa position axiale représentée par la figure 1, la poulie 22, et par conséquent la douille de commande 19, tourne exactement à la même vitesse que l'arbre 1, car les poulies crantées 5 et 22, respectivement 25 et 28, ont le même nombre de dents. La position angulaire relative de la poulie 22 par rapport à celle de l'arbre 1 reste constante.

Lorsque le vérin 26 est commandé pour se déplacer vers la gauche (sur la figure 1), il pousse l'arbre 31 par l'intermédiaire de la cloche 37 et du roulement de poussée 38. De ce fait, les rainures hélicoïdales 33 créent un déplacement angulaire relatif entre les poulies 25 et 28 qui se transmet par les courroies 24 et 30 et engendrent un mouvement relatif de la poule 22 par rapport à l'arbre 1. Le choix judicieux du pas des rainures hélicoïdales 33, de la course du vérin 36 et du rapport de transmission entre les poulies 5 et 25, respectivement 22 et 28, permet d'obtenir un angle de rotation relatif de 90° entre la poule 22 solidaire de la douille 19 et la poulie 5, solidaire de l'arbre 1. Cet angle peut être ajusté à l'aide d'une vis de réglage 40 qui limite la course du vérin 36.

La sélection de l'une ou de l'autre paire d'outils ne peut se faire que lorsque la douille de commande 19 est en position médiane, c'est-à-dire lorsqu'il n'y a pas de contact entre les portions d'hélices 14a à 14d et les surfaces de commande 20a et 20b de forme ellipsoïdales.

Le nombre d'outils n'est pas limité à deux paires et, si l'encombrement le permet, une ou plusieurs paires d'outils supplémentaires peuvent être montées sur la broche. Le dispositif de commande du déphasage décrit ci-dessus est un moyen pour sélectionner une paire d'outils avec laquelle un opérateur souhaite travailler. Ce mécanisme pourrait être remplacé par un autre dispositif, par exemple un système à engrenages dont le fonctionnement serait alors équivalent à celui des poules d'entraînement.

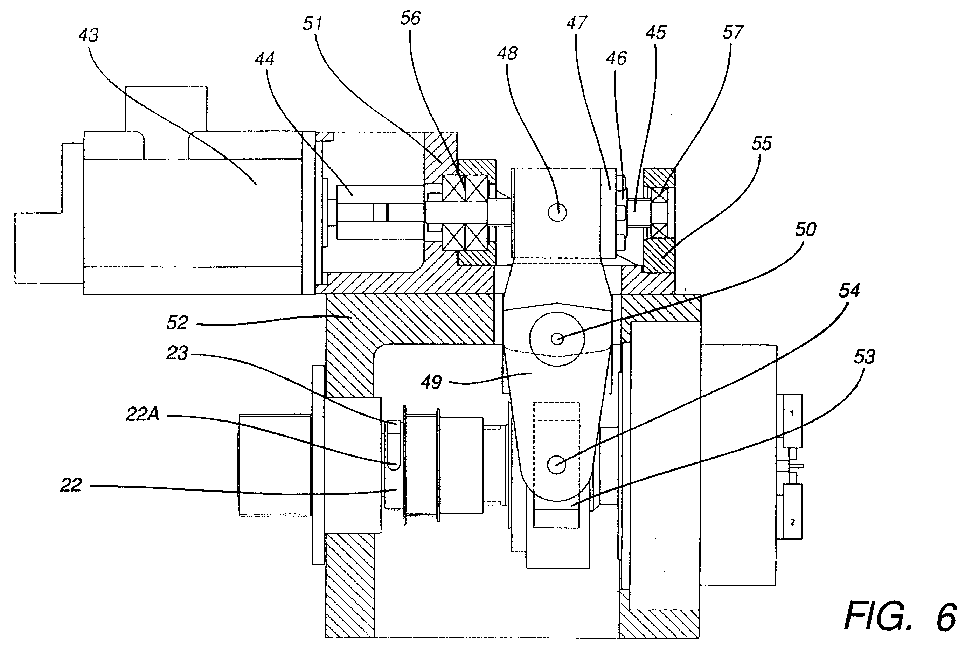

Le dispositif d'entraînement des outils est décrit plus en détail en référence aux figures 1 et 6. Il a pour but de déplacer la douille de commande 19 pendant la rotation de la broche, afin d'assurer la plongée des burins. Dans ce but, un support 51 est monté sur le dessus du bâti de broche 52, ce support portant un axe 50 autour duquel peut pivoter un levier de commande 49. Du côté de la broche, ce levier comporte deux noix d'entraînement 53 centrées par des axes 54 qui s'engagent dans deux rainures d'une douille 42 (voir figure 1) montée sur la douille de commande 19. En pivotant, le levier 49 entraîne en translation la douille de commande 19 via les axes 54, les noix 53, la douille 42 et une paire de roulements à billes à contact oblique préchargés 41.

L'organe qui génère ce déplacement est un servomoteur à capteur de position intégré 43 agencé pour entraîner en rotation une vis à billes 45 par l'intermédiaire d'un accouplement 44. Un palier 56 est agencé pour reprendre les efforts axiaux, alors que l'autre extrémité de la vis à billes 45 est soutenue par un palier 57 logé dans un bloc 55 fixé sur le support 51. L'écrou 46 de la vis à billes 45 est monté dans un bloc 47 qui peut pivoter par rapport à un axe 48 supporté par le levier 49.

Lorsque le moteur 43 effectue un déplacement angulaire donné, celui-ci est transformé en un déplacement linéaire de l'écrou 46 et du bloc 47 par le système de vis. Ce bloc étant lié au lever 49 par l'axe 48, le lever 49 pivote et, du fait que les distances entre les axes 50 et 48, respectivement 50 et 54 sont égales, la douille de commande 19 se déplace d'une distance exactement égale au déplacement du bloc 47. Un montage particulièrement soigné permet d'éviter les jeux dans la transmission.

## Revendications

1. Unité d'usinage à tête rotative portant au moins deux paires d'outils pivotants, pour l'usinage d'une pièce non rotative centrée sur l'axe de rotation de la tête, comportant:
- un bâti sur lequel est monté un rotor (100) comprenant la tête rotative et une broche (101) solidaire de cette tête, le rotor (100) etant pourvu d'un conduit axial et couplé à des moyens d'entraînement en rotation,
- des moyens de guidage axial de la pièce, ces moyens étant montés par des paliers dans la broche (101) ou la tête rotative,
- des moyens pour maintenir et déplacer axialement la pièce,
- au moins quatre porte burin (17), montés dans la tête rotative de manière à pivoter autour d'axes respectifs parallèles à l'axe de rotation, chaque support comportant un levier de commande (13a-13d) disposé transversalement, et
- des moyens de commande de pivotement, coopérant avec ledit levier de commande (13a-13d) et comprenant un élément rotatif de commande, qui est mobile en translation axiale dans le rotor (100) et couplé à un dispositif de commande de translation, et des paires d'organes d'appui disposés respectivement sur chaque levier de commande (13a-13d) et sur l'élément rotatif de commande correspondant, chaque paire d'organes d'appui comprenant une surface directrice helicoïdale (14a-14d) et une surface d'appui (20a, 20b) s'appuyant contre la surface directrice helicoïdale (14a-14d) dans une position variable en fonction de la translation de l'élément rotatif de commande, ladite surface directrice helicoïdale (14a-14d) se trouvant sur le porte-burin (17) et la surface d'appui correspondante se trouvant sur l'élément rotatif de commande, chaque surface directrice helicoïdale (14a-14d) correspondant à un support d'outil pivotant ayant la forme d'une portion d'hélice dont l'axe coïncide avec l'axe de pivotement dudit support, et les surfaces directrices helicoïdales (14a-14d) ayant des pas respectifs de sens opposés,
caractérisée en ce que ledit element rotatif de commande comporte une douille (19) montée coaxialement sur ladite broche (101), cette douille (19) étant agencée pour coulisser axialement et pour occuper une première position, une deuxième position et une position médiane, cette douille (19) portant à l'une de ses extrémités les surfaces d'appui (20a et 20b), ledites surfaces d'appui (20a, 20b) de forme ellipsoïdales, et agencées pour coopérer avec les surfaces directrices hélicoïdales (14a, 14b, 14c, et 14d) des organes d'appui et pour effectuer la plongée des outils, des moyens pour déplacer axialement ladite douille de commande (19) et un dispositif de déphasage agencé pour faire tourner ladite douille de commande (19) d'un angle prédéterminé autour de son axe.

2. Unité selon la revendication 1, caractérisée en ce que les moyens pour déplacer la douille de commande (19) comportent un levier de commande (49) pivotant sur un axe (50) monté sur un support (51) solidaire du bâti (52) portant la broche (101), ce lever comportant deux noix d'entraînement (53) centrées sur des axes (54) qui s'engagent dans deux rainures d'une douille (42) montée coaxialement sur la douille de commande (19).

3. Unité selon la revendication 2, caractérisée en ce que la douille (42) est montée sur la douille de commande (19) par l'intermédiaire de deux roulements à billes à contact oblique préchargés (41).

4. Unité selon la revendication 1, caractérisée en ce que le dispositif de déphasage comporte une poulie (22) reliée à la douille de commande (19) par deux clavettes (21) qui assurent le couplage en rotation entre ladite poule et ladite douille et qui laissent cette dernière libre de se déplacer axialement, ladite poule étant couplée à une poulie folle (28) montée sur un support tubulaire (27) portant une poule de renvoi (25), montée folle et coupée à une poulie d'entraînement (5) montée sur la broche et entraînée par un moteur d'entraînement.

5. Unité selon la revendication 4, caractérisée en ce que le couplage entre la poule (22) et la poulie folle (28) s'effectue au moyen d'une courroie (30).

6. Unité selon la revendication 4, caractérisée en ce que le couplage entre la poulie de renvoi (25) et la poule d'entraînement (5) s'effectue au moyen d'une courroie (24).

7. Unité selon la revendication 4, caractérisée en ce que le dispositif de déphasage comporte des moyens pour décaler angulairement la poulie folle (28) et la poulie de renvoi (25).

8. Unité selon la revendication 7, caractérisée en ce que les moyens pour décaler angulairement les deux poulies comportent deux pots (32) solidaires de la poulie de renvoi (25) engagés dans deux rainures hélicoïdales (33) d'un arbre (31) et deux pots (34) solidaires de la poulie folle (28) engagés dans deux rainures longitudinales (35) dudit arbre (31), ainsi qu'un organe (36) agencé pour déplacer axialement ledit arbre (31).

9. Unité selon la revendication 8, caractérisée en ce que ledit organe (36) est un vérin et en ce que ledit vérin est coupé à l'arbre (31) au moyen d'une cloche (37) et d'un roulement de poussée (38) montés à une extrémité de cet arbre.

10. Unité selon la revendication 9, caractérisée en ce que ledit vérin (36) est associé à des capteurs de position agencés pour fournir un signal de quittance de son déplacement.

11. Unité selon la revendication 8, caractérisée en ce que la poulie folle (28) et la poulie de renvoi (25) sont crantées et ont le même nombre de dents.

12. Unité selon la revendication 8, caractérisée en ce que les rainures hélicoïdales (33) sont agencées de telle manière que, lorsque le vérin (36) déplace l'arbre (31) d'une première position vers une seconde position, le décalage de la poule (22) solidaire de la douille de commande (19) par rapport à l'arbre (1) solidaire de la broche (101) est de 90° lorsque le nombre de paires d'outils portées par la tête d'usinage est égal à deux.

13. Unité selon la revendication 12, caractérisée en ce que le vérin (36) est associé à une vis de réglage (40) qui limite sa course.

## Claims

1. A machining unit with a rotating head with at least two pairs of pivoting tools for machining of a non-rotating piece centered along the axis of rotation of the head, comprising:
- a framework upon which a rotor (100) is mounted comprising the rotating head and a spindle (101) integral with this head, the rotor (100) being provided with an axial conduit and coupled with means for providing rotational drive,
- means for axial guidance of the piece, these means being mounted by bearings in the spindle (101) or the rotating head,
- means for maintaining and axially moving the piece,
- at least four cutter carriers (17) mounted on the rotating head in such a way as to pivot around respective axles extending parallel to the rotation axis, each support containing a transversely arranged control lever (13a - 13d), and
- means for controlling pivoting, co-operating with said control lever (13a - 13d) and including a rotating control element, which is mobile in axial translation in the rotor (100) and coupled to a control device of translation, and pairs of drive mechanisms respectively arranged on each of the control lever (13a -13d) and on the corresponding rotating control element, each pair of drive mechanisms including an helical directing surface (14a -14d) and a drive surface (20a, 20b) supporting itself against the helical directing surface (14a -14d), in a variable position, in relation to the translation of the rotating control element, said helical directing surface (14a -14d) being located on the cutter carrier (17) and the corresponding drive surface being located on the rotating control element, each helical directing surface (14a -14d) corresponding to a pivoting tool support having a shape of a portion of helix whose axis coincides with the pivoting axis of said support, and helical directing surfaces (14a - 14d) having respective pitches of opposing directions,
characterized in that said rotating control element comprises a sleeve (19) mounted on said spindle (101), this sleeve (19) being fitted in order to slide axially and to occupy a first position, a second position and a middle position, this sleeve (19) having the drive surfaces (20a, 20b) at one of its ends, said drive surfaces (20a, 20b) being of an ellipsoidal form and arranged to cooperate with the helical drive surfaces (14a, 140, 14c and 14d) of the drive mechanisms and to execute the plunge of the tools, means for axially moving said control sleeve (19), and a phase displacement device arranged to cause said control sleeve (19) to rotate a predetermined angle around its axis.

2. Unit according to claim 1, characterized in that the means for moving the control sleeve (19) includes a control lever (49) pivoting upon an axle (50) mounted on a support (51) fixed to the frame (52) carrying the spindle (101), this lever comprising two drive nuts (53) centered about axles (54) that engage two grooves of a sleeve (42) mounted coaxially on the control sleeve (19).

3. Unit according to claim 2, characterized in that the sleeve (42) is mounted on the control sleeve (19) by two ball bearings with oblique preloaded contacts.

4. Unit according to claim 1, characterized in that the phase displacement device includes a pulley (22) linked to the control sleeve (19) by two cotter pins (21) that assure a rotational coupling between said pulley and said sleeve and that allow the latter the freedom to move axially, said pulley being coupled to a loose pulley (28) mounted on a tubular support (27) supporting a guide pulley (25) mounted freely and linked to a driving pulley (5) mounted on the spindle and driven by a drive motor.

5. Unit according to claim 4, characterized in that the linkage between the pulley (22) and the loose pulley (28) is accomplished by means of a belt (30).

6. Unit according to claim 4, characterized in that the coupling between the guide pulley (25) and the driving pulley (5) is accomplished by means of a belt (24).

7. Unit according to claim 4, characterized in that the phase displacement device includes means to change the angular position of the loose pulley (28) and the guide pulley (25).

8. Unit according to claim 7, characterized in that the means to change the angular position of the two pulleys includes two interdependent contacts (32) of the guide pulley (25) engaged in two helical grooves (33) of one shaft (31) and two interdependent contacts (34) of the loose pulley (28) engaged in two longitudinal grooves (35) of said shaft (31), as well as a device (36) fitted to move said shaft (31) axially.

9. Unit according to claim 8, characterized in that said device (36) is a jack and in that said jack is linked to the shaft (31) by means of a bell cover (37) and a thrust bearing (38) mounted at one end of this shaft.

10. Unit according to claim 9, characterized in that said jack (36) is linked to position sensors arranged to provide a signal of the discharge of its movement.

11. Unit according to claim 8, characterized in that the loose pulley (28) and the guide pulley (25) are notched pulleys that have the same number of teeth.

12. Unit according to claim 8, characterized in that the helical grooves (33) are arranged in such a way that as the jack (36) moves the shaft (31) from a first position towards a second position, the change of angular position of the pulley (22) integral with the control sleeve (19) with respect to the shaft (1) linked to the spindle (101) is 90° when the number of pairs of tools carried by the machining head is equal to two.

13. Unit according to claim 12, characterized in that the jack (36) is linked to an adjustable screw (40) which limits its path.

## Patentansprüche

1. Bearbeitungseinheit mit Drehkopf, die mindestens zwei Paare von Drehwerkzeugen für die Bearbeitung eines nicht rotierenden Werkstücks, das auf der Drehachse des Kopfes zentriert ist, trägt, bestehend aus:
- einem Gehäuse, auf dem ein Rotor (100) montiert ist, bestehend aus dem Drehkopf und einer Spindel (101), die mit diesem Kopf verbunden ist, wobei der Rotor (100) mit einer Axialführung versehen und mit Mitteln für den Drehantrieb gekoppelt ist;
- axialen Führungsmitteln für das Werkstück, wobei diese Mittel durch Lager in der Spindel (101) oder dem Drehkopf montiert sind;
- Mitteln zum Halten und axialen Verschieben des Werkstücks;
- mindestens vier Werkzeughaltern (17), die in dem Drehkopf derart montiert sind, daß sie sich um jeweilige Achsen, die parallel zur Drehachse sind, drehen, wobei jeder Halter einen quer angeordneten Steuerhebel (13a-13d) umfaßt, und
- Mitteln zur Steuerung der Drehung, die mit dem Steuerhebel (13a-13d) zusammenwirken und ein drehbares Steuerelement umfassen, das in axialer Translation in dem Rotor (100) beweglich ist und mit einer Vorrichtung zur Steuerung der Translation gekoppelt ist, und Paaren von Stützelementen, die jeweils auf jedem Steuerhebel (13a-13d) und auf dem entsprechenden drehbaren Steuerelement angeordnet sind, wobei jedes Paar von Stützelementen eine führende spiralförmige Fläche (14a-14d) und eine Stützfläche (20a, 20b) umfaßt, die auf der führenden sprialförmigen Fläche (14a-14d) in einer variablen Position in Abhängigkeit von der Translation des drehbaren Steuerelements aufliegt, wobei sich die führende spiralförmige Fläche (14a-14d) auf dem Werkzeughalter (17) befindet und sich die entsprechende Stützfläche auf dem drehbaren Steuerelement befindet, wobei jede führende spiralförmige Fläche (14a-14d) einem drehbaren Werkzeughalter entspricht, der die Form eines sprialförmigen Abschnittes aufweist, dessen Achse mit der Drehachse des Halters zusammenfällt, und wobei die führenden spiralförmigen Flächen (14a-14d) Steigungen in die jeweils entgegengesetzte Richtung aufweisen, dadurch gekennzeichnet, daß das drehbare Steuerelement eine Hülse (19) umfaßt, die koaxial auf der Spindel (101) montiert ist, wobei diese Hülse (19) derart angeordnet ist, daß sie axial gleitet und eine erste Position, eine zweite Position und eine mittlere Position einnimmt, wobei diese Hülse (19) an einem ihrer Enden die Stützflächen (20a und 20b), wobei diese Stützflächen (20a, 20b) elliptische Form aufweisen und derart angeordnet sind, daß sie mit den spiralförmigen führenden Flächen (14a, 14b, 14c und 14d) der Stützelemente zusammenwirken und daß sie den Vorschub der Werkzeuge bewirken, Mittel zur Axialverschiebung der Steuerhülse (19) und eine Vorrichtung zur Phasenverschiebung trägt, die derart angeordnet ist, daß sie das Drehen der Steuerhülse (19) um einen vorbestimmten Winkel um ihre Achse bewirkt.

2. Einheit nach Anspruch 1, dadurch gekennzeichnet, daß die Mittel zum Verschieben der Steuerhülse (19) einen Steuerhebel (49) umfassen, der auf einer Achse (50) schwenkt, die auf einer Stütze (51) montiert ist, die mit dem Gehäuse (52) verbunden ist, das die Spindel (101) trägt, wobei dieser Hebel zwei Antriebsteile (53) umfaßt, die auf Achsen (54) zentriert sind und in zwei Rillen einer Hülse (42) eingreifen, die koaxial auf der Steuerhülse (19) montiert ist.

3. Einheit nach Anspruch 2, dadurch gekennzeichnet, daß die Hülse (42) auf der Steuerhülse (19) mit Hilfe von zwei vorbelasteten Rollenlagern (41) mit Schrägkontakt montiert ist.

4. Einheit nach Anspruch 1, dadurch gekennzeichnet, daß die Vorrichtung zur Phasenverschiebung eine Rolle (22) umfaßt, die mit der Steuerhülse (19) durch zwei Keile (21) verbunden ist, die die Drehkopplung zwischen der Rolle und der Hülse gewährleisten und die die freie Axialverschiebung letztgenannter ermöglichen, wobei die Rolle mit einer beweglichen Rolle (28) gekoppelt ist, die auf einer röhrenförmigen Stütze (27) montiert ist, die eine Umlenkrolle (25) trägt, die beweglich montiert und mit einer Antriebsrolle (5) gekoppelt ist, die auf der Spindel montiert ist und von einem Antriebsmotor angetrieben wird.

5. Einheit nach Anspruch 4, dadurch gekennzeichnet, daß die Kopplung zwischen der Rolle (22) und der beweglichen Rolle (28) mit Hilfe eines Riemens (30) erfolgt.

6. Einheit nach Anspruch 4, dadurch gekennzeichnet, daß die Kopplung zwischen der Umlenkrolle (25) und der Antriebsrolle (5) mit Hilfe eines Riemens (24) erfolgt.

7. Einheit nach Anspruch 4, dadurch gekennzeichnet, daß die Vorrichtung zur Phasenverschiebung Mittel zur Winkelversetzung der beweglichen Rolle (28) und der Umlenkrolle (25) umfaßt.

8. Einheit nach Anspruch 7, dadurch gekennzeichnet, daß die Mittel zur Winkelversetzung der beiden Rollen zwei Stifte (32), die mit der Umlenkrolle (25) verbunden sind und in zwei spiralförmige Nuten (33) einer Welle (31) eingreifen, und zwei Stifte (34), die mit der beweglichen Rolle (28) verbunden sind und in zwei Längsrillen (35) der Welle (31) eingreifen, sowie ein Element (36) umfassen, das derart angeordnet ist, daß die Welle (31) axial verschoben wird.

9. Einheit nach Anspruch 8, dadurch gekennzeichnet, daß das Element (36) ein Zylinder ist und daß dieser Zylinder mit der Welle (31) mit Hilfe einer Glocke (37) und eines Schublagers (38) gekoppelt ist, die an einem Ende dieser Welle montiert sind.

10. Einheit nach Anspruch 9, dadurch gekennzeichnet, daß der Zylinder (36) mit Positionsgebern verbunden ist, die derart angeordnet sind, daß sie ein Bestätigungssignal für seine Verschiebung liefern.

11. Einheit nach Anspruch 8, dadurch gekennzeichnet, daß die bewegliche Rolle (28) und die Umlenkrolle (25) gezahnt sind und dieselbe Anzahl von Zähnen aufweisen.

12. Einheit nach Anspruch 8, dadurch gekennzeichnet, daß die spiralförmigen Rillen (33) derart angeordnet sind, daß, wenn der Zylinder (36) die Welle (31) von einer ersten Position in eine zweite Position verschiebt, die Versetzung der Rolle (22), die mit der Steuerhülse (19) verbunden ist, in bezug zu der Welle (1), die mit der Spindel (101) verbunden ist, 90° beträgt, wenn die Anzahl von Werkzeugpaaren, die von dem Bearbeitungskopf getragen werden, gleich zwei ist.

13. Einheit nach Anspruch 12, dadurch gekennzeichnet, daß der Zylinder (36) mit einer Steuerschraube (40) verbunden ist, die seinen Hub begrenzt.
